# EUROPEAN PATENT APPLICATION

(11) **EP 1 533 869 A1**
(43) Date of publication of application: **25.05.2005**
(21) Application number: 04257209.9
(22) Date of filing: 18.11.2004
(51) Int. Cl.: H01R 4/48, H01R 4/50, H01R 13/506, G01K 7/02

(54) **Screwless connector for use within a thermocouple sensor or probe arrangement**

(30) Priority: 21.11.2003 US 524141 P; 15.11.2004 US 989074
(71) Applicant: Marlin Manufacturing Corporation, Cleveland, OH 44130 (US)
(72) Inventor: Park, Richard, Parma, OH 44130 (US); Kloock, Gary, Berea, OH 44017 (US); Tymkewicz, Alan, Westlake, OH 44145 (US)
(74) Representative: Harrison Goddard Foote

(57) **Abstract**

In one example, a thermocouple connector arrangement that includes a first connector configured to have a probe lead extending therefrom, and having an interior configured to receive a terminus of the probe lead, and a second connector (20) configured to have an electrical connection lead (22') extending therefrom, and having an interior configured to receive a terminus (84') of the lead. The connectors include mating parts (34) that, when mated, provide an electrical conduction path between the probe lead and the electrical lead (22). At least one of the first and second connectors (20) includes housing parts (32,38) that mate in a snap-lock arrangement. The one connector includes structure (76) that engages the respective terminus (84') and secures the respective terminus against removal during the mating of the housing parts (32,38) and without the use of a threaded fastener. In one example, at least one mating part is twisted into a helix.

## Description

### FIELD OF THE INVENTION

The present invention relates to improvements in the design, construction and manufacture of connectors for a thermocouple system. The present invention particularly relates to a design and method of connector manufacture that is low cost, efficient, has reduced number of assembly parts and assembly steps, and avoids the use of screws.

### BACKGROUND OF THE INVENTION

Connectors are utilized to interconnect a thermocouple probe or sensor member within a thermocouple system. One portion of the connection arrangement is interconnected with a probe member. A second portion of the connection arrangement is connected to a wire that may extend to a strip panel. In turn, the strip panel may be operatively connected via cable or the like to one or more instruments.

It is known to use screws to connect wire leads and screws that secure a cover onto a body of at least one portion of the connector arrangement. It is labor intensive to provide such connections. Also, such construction may not provide for ease of variation of component parts.

### SUMMARY OF THE INVENTION

In accordance with one aspect, the present invention provides a thermocouple connector arrangement that includes a first connector configured to have a thermocouple probe lead extending therefrom. The first connector has an interior configured to receive an electrical connection terminus of the thermocouple probe lead. A second connector of the arrangement is configured to have an electrical connection lead extending therefrom. The second connector has an interior configured to receive a terminus of the electrical connection lead. The first and second connectors include electrically conductive mating parts that, when mated, provide an electrical conduction path between the thermocouple probe lead and the electrical connection lead. At least one of the first and second connectors includes housing parts that mate in a snap-lock arrangement to secure the housing parts together and to enclose the respective interior. The at least one of the first and second connectors includes structure that engages the respective terminus and secures the respective terminus against removal during the mating of the housing parts and without the use of a threaded fastener.

In accordance with another aspect, the present invention provides a thermocouple connector arrangement that includes a first connector configured to have a thermocouple probe lead extending therefrom, and having an interior configured to receive an electrical connection terminus of the thermocouple probe lead, and a second connector configured to have an electrical connection lead extending therefrom, and having an interior configured to receive a terminus of the electrical connection lead. The first and second connectors include electrically conductive mating parts that, when mated, provide an electrical conduction path between the thermocouple probe lead and the electrical connection lead. At least one of the first and second connectors includes housing parts that mate in a snap-lock arrangement to secure the housing parts together and to enclose the respective interior.

In accordance with another aspect, the present invention provides a thermocouple connector arrangement that includes a first connector configured to have a thermocouple probe lead extending therefrom, and having a portion configured to receive an electrical connection terminus of the thermocouple probe lead, and a second connector configured to have an electrical connection lead extending therefrom, and configured to receive a terminus of the electrical connection lead. The first and second connectors include electrically conductive mating parts that, when mated, provide an electrical conduction path between the thermocouple probe lead and the electrical connection lead. At least one of the first and second connectors includes structure that engages the respective terminus and secures the respective terminus against removal without the use of a threaded fastener.

In accordance with yet another aspect, the present invention provides a thermocouple connector arrangement. The arrangement includes a first connector configured to have a thermocouple probe lead extending therefrom, and having an interior configured to receive an electrical connection terminus of the thermocouple probe lead. The arrangement includes a second connector configured to have an electrical connection lead extending therefrom, and having an interior configured to receive a terminus of the electrical connection lead. The first and second connectors include electrically conductive mating parts that, when mated, provide an electrical conduction path between the thermocouple probe lead and the electrical connection lead. At least one mating part of one of the first and second connectors is a prong that includes a strip of conductive material twisted into a helix.

### BRIEF DESCRIPTION OF THE DRAWINGS

Fig. 1 is an illustration of an example system that utilizes a thermocouple connector arrangement in accordance with the present invention;

Fig. 2 is a perspective view of one connector, partially assembled, of the example system of Fig. 1 and in accordance with one aspect of the present invention;

Fig. 3 is a perspective view of the connector part of Fig. 2, exploded to show the components;

Fig. 4 is a reverse-side, perspective view of two parts of the connector of Fig. 2, to show detail not visible in Fig. 3;

Figs. 5A and 5B are perspective views of example wire cables and associated adapters that can be utilized with the connector of Fig. 2;

Fig. 6 is a perspective view of the connector of Fig. 2 with an example wire cable prepared and ready for quick, screwless connection to the connector;

Fig. 7 is a view similar to Fig. 6, but with the wire cable in position for the quick, screwless connection to the connector;

Fig. 8 is a view similar to Fig. 7, but with quick, screwless connection to the connector completed;

Fig. 9 is a perspective view of another connector, partially assembled, of the system of Fig. 1 and in accordance with one aspect of the present invention;

Fig. 10 is a perspective view of the connector of Fig. 9, exploded to show the components;

Fig. 11 is a reverse-side, perspective view of two parts of the connector of Fig. 9, to show detail not visible in Fig. 10; and

Fig. 12 is a perspective view of a connector that has some alternative structure.

### DESCRIPTION OF EXAMPLE OF EMBODIMENTS

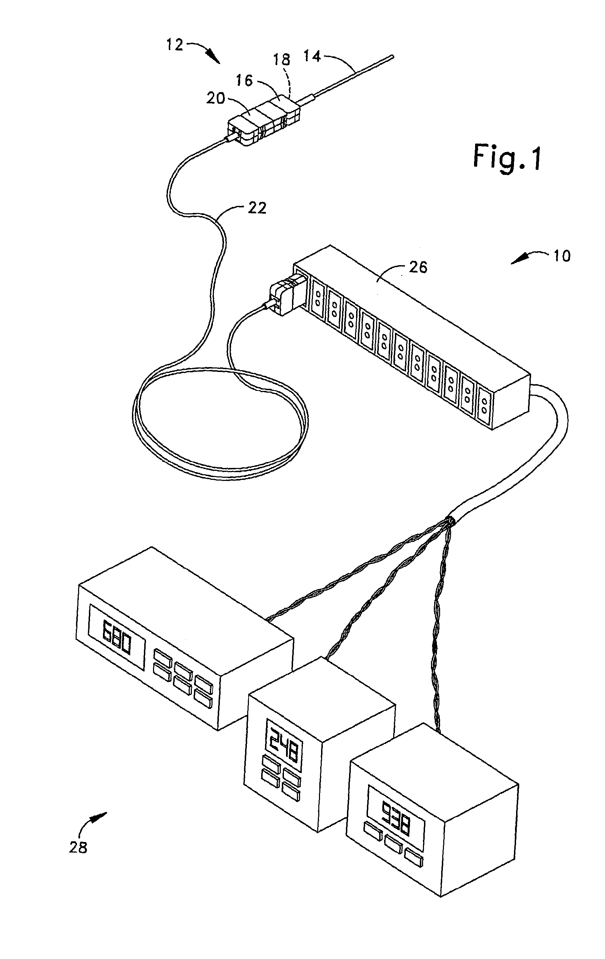

An example thermocouple system 10 that utilizes a thermocouple connector arrangement 12 in accordance with one aspect of the present invention is shown in Fig. 1. Within the example system 10, the connector arrangement 12 is utilized to connect a thermocouple probe or sensor member 14 to other portions of the system. In the shown example, the probe member 14 is elongate and rigid. However, it is contemplated that other configurations are possible.

A first connector 16 of the connection arrangement 12 is interconnected with the probe member 14. Specifically, the first connector 16 is configured to have a thermocouple probe lead 18 extending therefrom, and the first connector has an interior configured to receive an electrical connection terminus of the thermocouple probe lead. A second connector 20 of the connection arrangement 12 is connected to an electrical connection lead 22, such an elongate wire cable. Further, the second connector 20 is configured to have the electrical connection lead extending therefrom, and the second connector has an interior configured to receive a terminus of the electrical connection lead. It is to be appreciated that the designations of first and second for the connectors are merely for ease of identification.

In the shown example system 10, the wire cable 22 extends to a strip panel 26. In turn, the strip panel 26 is operatively connected via cable or the like to one or more instruments 28. It is to be appreciated that the shown example system 10 may have different components, structure, etc., and these aspects of the system 10 are not specific limitations upon the present invention.

The first and second connectors 16 and 20 include electrically conductive mating parts that, when mated, provide an electrical conduction path between the thermocouple probe lead 18 and the wire cable (electrical connection lead) 22. The electrically conductive mating parts are described further below. However, it is to be appreciated that the specifics of the electrically conductive mating parts may not be a limitation on the present invention.

In accordance with one aspect, at least one of the first and second connectors 16, 20 includes housing parts that mate in a snap-lock arrangement to secure the housing parts together and to enclose the respective interior. Also in accordance with one another aspect, at least one of the first and second connectors 16, 20 includes structure that engages the respective terminus and secures the respective terminus against removal without the use of a threaded fastener. As a further aspect, the engagement and securing accomplished without the use of a threaded fastener occurs during the mating of the housing parts.

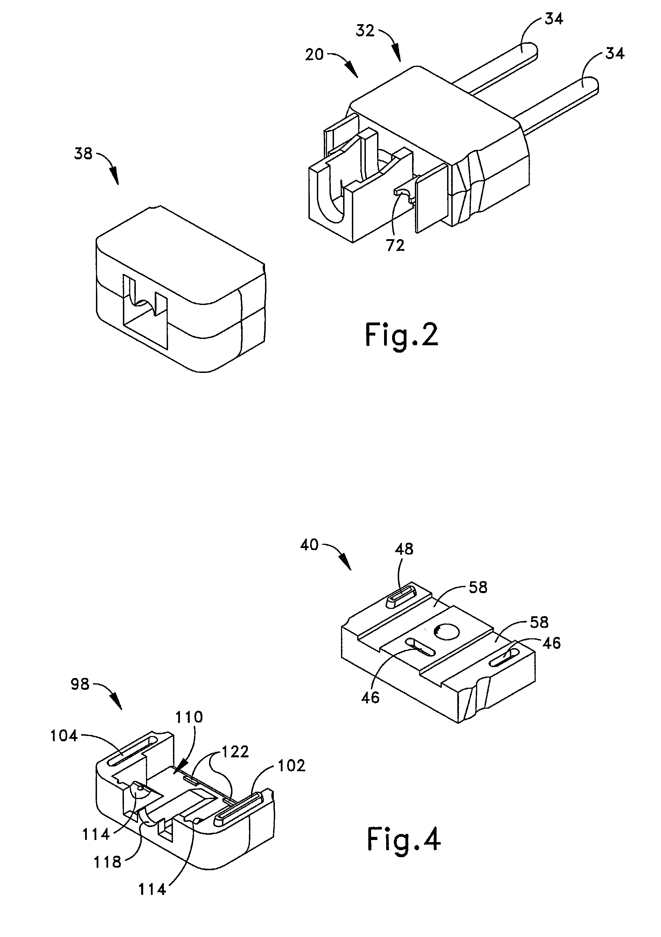

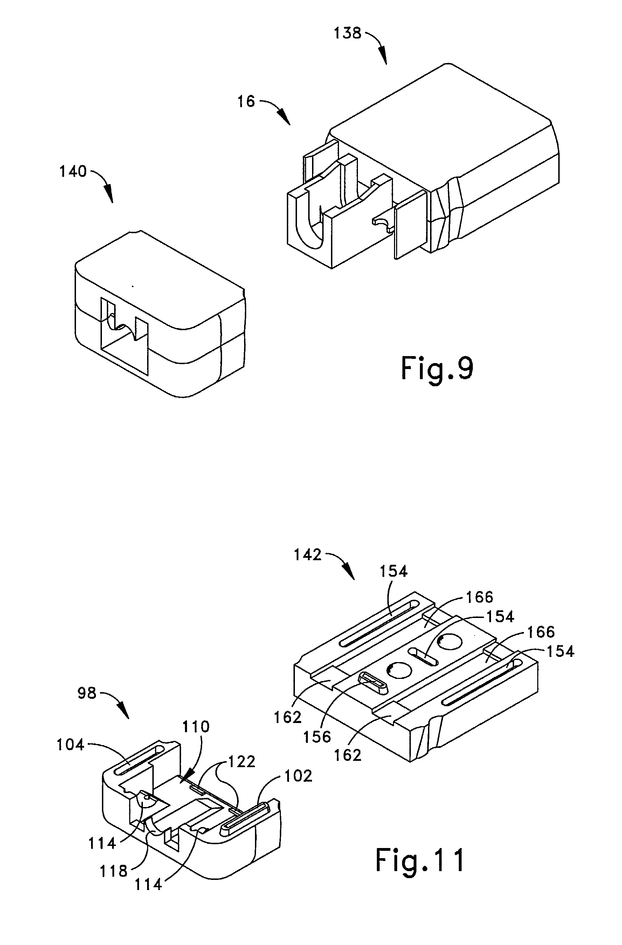

Fig. 2 is a perspective view of an example of one of the connectors 20 of the arrangement 12 shown in Fig. 1. The shown connector (Fig. 2) happens to be a plug connector and is the second connector 20 in the shown example. However, it is to be appreciated that at least some of the structural features shown for the second connector 20 may be applicable for the first connector 16 (see Fig. 9). The second connector 20 (Fig. 2) includes one housing part that is a body 32 from which two metal prongs 34 extend. Another housing part of the connector 20 is a cap 38 that snap-fits with the body 32.

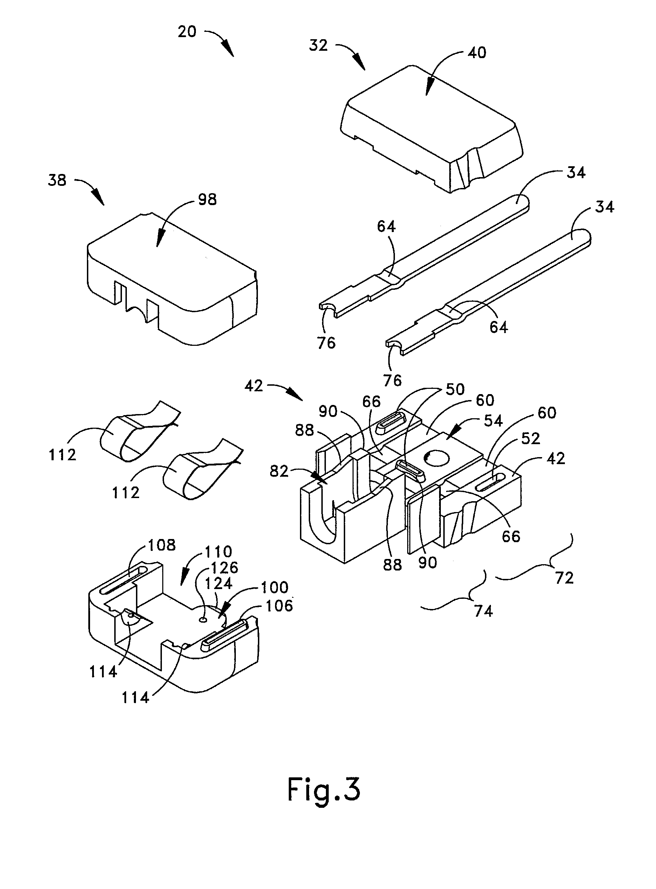

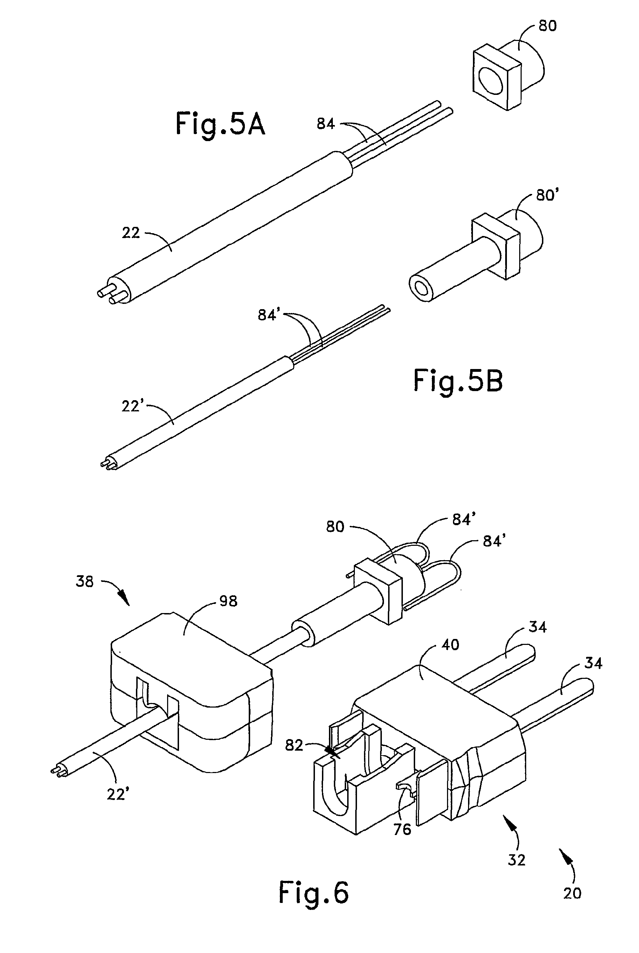

The exploded view of Figs. 3 and the reverse-angle view of Fig. 4 show details of the various parts of the example second connector 20. Specifically, the body 32 has two body sections 40 and 42, which are termed upper and lower for ease of reference only. In one example, the body sections 40 and 42 are made of a thermoplastic. The body sections 40 and 42 are coupled together and secured by any known or to be determined means. Alternatively, other construction techniques for the body, such as a mold-over technique, can be used. In the shown example, the upper body section 40 (Fig. 4) has a series of recesses (e.g., two) 46 and one projection 48, and the lower body section 42 (Fig. 3) has a series of projections (e.g., two) 50 and one recess 52. The respective projections and the recesses 48/52, 50/46, mate when the upper and lower body sections 40 and 42 are coupled together. It is to be noted that in one example, the projections 48 and 50 have structure that aid in securing the upper and lower body sections 40 and 42 together. For example, the structure may be raised material, e.g., in an elongate pyramidal shape, which flows upon occurrence of an ultrasonic welding procedure.

As can be appreciated by viewing Fig. 3, the upper and lower body sections 40 and 42 are configured to receive the prongs 34 at an interior 54 of the body 32. Specifically, the upper and lower body sections 40 and 42 include recesses 58 and 60, respectively, in which segments of the prongs 34 lie. It should be noted that the prongs 34 have portions that mate with portions of at least one of the body sections 40 and 42. In the shown example, each prong 34 has an offset 64 (e.g., a U bend). The lower body section 42 has a corresponding low segment 66 within each of the recesses 60. When the two body sections 40 and 42 are mated and secured together, the prongs 34 are retained therein.

The portion of the connector body 32 that retains the prongs 34 can be considered to be a first or front portion 72 (Fig. 3) of the body, and the end from which the prongs prominently extend can be considered to be the front end of the body. Such a front portion 72 would include the entire upper section 40 and the front of the lower section 42. A portion 74 of the lower section 42 does extend to the rear and could naturally be considered a rear portion 74 of the body 32.

As can be appreciated, a substantial portion of each prong 34 extends from the front end of the body 32 for connection to the other connector 16. However, a rear end portion 76 of each prong 34 extends rearward from the front portion 72 of the body 32. The rear end portion 76 of each prong 34 is located at a respective side of the rear portion 74 of the body 32 (i.e., the rear of the lower body section). These prong end portions 76 are provided for electrical connection to wires of the wire cable 22, which will be described below.

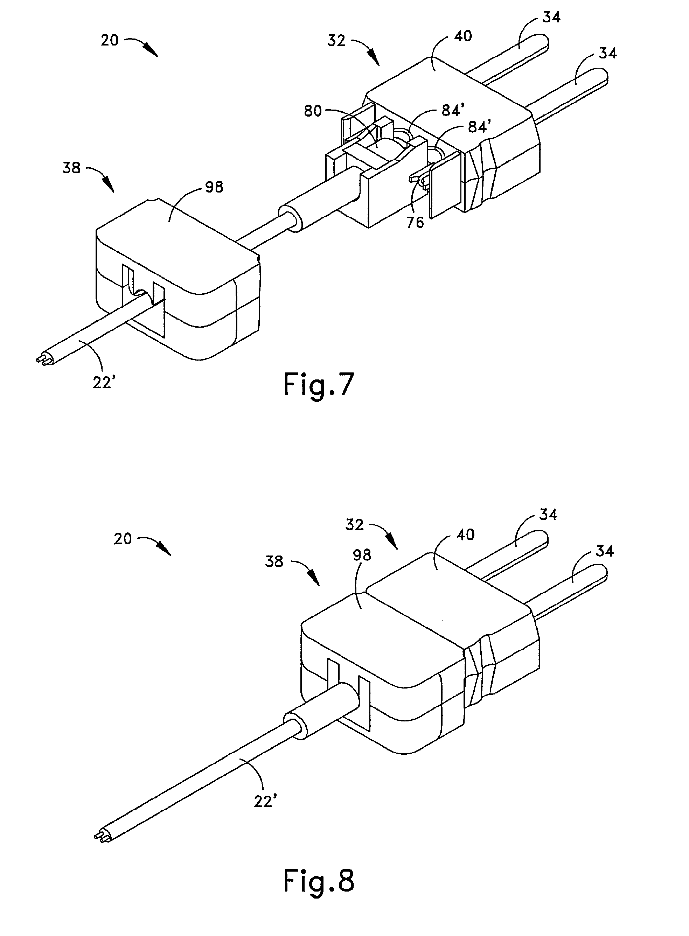

Turning to the rear portion 74 of the body 32, it provides two functions. First, the rear portion 74 is configured to receive a crimp adapter 80 (Figs. 5A or 5B) utilized in connecting the wire cable (the electrical connection lead) 22 to the connector 20. In the shown example, the rear portion 74 has a recess 82 that is configured in size and shape to mate with the crimp adapter 80 to cradle and retain the crimp adapter. As can be appreciated upon viewing Figs. 6 and 7, the crimp adapter 80, with a polygonal (e.g., square, hexagonal, etc.) portion, fits snugly into the recess 82, which is specifically shaped to retain the crimp adaptor.

Within the shown example, wire cable 22 is elongate and flexible, and the wire cable has two wires 84. It should be noted that the connector could accommodate a wire cable, and included wires, of various size. Turning attention to Figs. 5A and 5B, it will be understood that the crimp adapter 80 may have structure and/or dimensions for different cable parameters. Different crimp adapters (e.g., 80, 80') can be used for the different cable parameters, and the connector 20 is configured to accommodate such different crimp adapters. Fig. 5A shows a relatively thick wire cable 22, with relatively thick wires 84, and an associated crimp connector 80 with structure and dimensions to accommodate the thickness. Within Fig. 5B, a relatively thinner wire cable 22' with associated thinner wires 84' is provided with a different crimp adapter 80'. It is to be appreciated that the present invention permits the use of the varying thickness cables, wires, and associated crimp connector adaptors to address these varying thicknesses. It is to be appreciated that Figs. 5A and 5B show alternatives designated via the use of a (prime) on the reference numbers. Hereinafter, only the reference numerals without the ' (prime) are used with the understanding that variations as suggested are possible.

Turning back to the second function of the rear portion 74, the portion is configured to provide one half of a snap-lock interconnection between the body 32 and the cap 38. The snap-lock connection is described further below. However, it is to be noted that the rear portion 74 (Fig. 3) includes at least one (e.g., two) sloped surface 88 and at least one (e.g., two) drop-off shoulder 90. Each sloped surface 88 tapers upward as the sloped surface extends toward the front of the body 32. Each shoulder 90 is located near the front-most terminus of the respective sloped surface 88.

The shown example of the cap 38 of the connector 20 is made of two sections 98 and 100. These sections 98, 100 can be made of thermoplastic and are secured together in a manner similar to the manner used for the body 32. As noted above, various techniques can be used. For ease of reference, these sections 98, 100 are referred to as upper and lower sections. The upper section 98 includes a projection 102 (fig. 4) and a recess 104, and the lower section 100 includes a projection 106 and a recess 108. When the upper and lower sections 98, 100 are mated together, each respective projection and recess pair 102/108, 106/104 is mated together. It is to be noted that in one example, the projections 102 and106 have structure that aid in securing the upper and lower sections 98, 100 together. For example, the structure may be raised material, e.g., in an elongate pyramidal shape, which flows upon occurrence of an ultrasonic welding procedure.

The cap 38 has an interior 110 that is bounded by the two sections 98, 100 and that provides multiple functions. First, the rear portion 74 (Fig. 3) of the body 32 is located within the interior 110 (e.g., shrouded within) when the body 32 and the cap 38 are connected together. Second, the interior 110 of the cap 38 houses at least one (e.g., two) means 112 to resiliently retain a terminus of the wire cable (electrical connector lead) 22 in electrical contact with at least one (e.g., both) of the prongs 34.

Within the shown example, each of the resilient retainer means is a spring 112, which is made of resilient metal. Within the shown example, each spring 112 has a general 'C' shape and acts as a clip.

The interior of the cap 140 is configured to receive and retain the springs 112. Each of the upper and lower sections 98 and 100 of the cap 38 has a curved seat portion 114 for each spring 112. The seat portions 114 cooperate when the upper and lower sections 98, 100 mate together to provide a seat pocket that cradles the respective spring 112, resists removal of the spring, and yet permits flexing of the spring.

The upper section 98 of the cap 38 has two additional features. First, the upper section 98 has a projection 118 that extends toward the lower section 100 of the cap 38. The projection 118 is configured and located to help retain the wire cable 22 and/or the crimp adapter 80 within the rear portion 74 of the body 32.

Second, the upper section 98 of the cap 38 has at least one (e.g., two) projection 122 that provide a second half of the snap-fit interconnection. Specifically, the projections 122 are located and configured such that the projections will cooperate with the sloped surfaces 88 and the shoulders 90 of the rear portion 74 of the body 32 to snap-lock the cap 38 onto the body. During the mating of the cap 38 onto the body 32, the projections 122 engage and ride along the sloped surfaces 88. As the cap 38 is moved toward a final position mated with the body 32, the sloped surfaces 88 deflect the projections 122 and thus part of the cap outward. However, as the cap 38 reaches the final position, the projections 122 arrive at the edge of the shoulders 90. Subsequently, the projections 122 drop off of the shoulders 90 with a snapping action (i.e., the deflected portion of the cap snaps back). Thus, the projections 122 rest against the shoulders 90.

It should be noted that the snap interlock mating could be accomplished by any other suitable snap interlock structure. This sort of snap interlock is commonly referred to as a one-way connection. It is to be noted that additional snap-lock structures may be utilized. For example, a tapered tip 124 that has a recess 126 is located on the lower section 100 of the cap 38. The tapered tip 124 and the recess 126 interact with a pin-like projection (not visible) on the outer side of the lower body section 42. The tapered tip 124 slides over the pin-like projection and the pin-like projection snaps into the recess 126 as the cap 38 is moved toward a final position mated with the body 32.

Turning to the connection of the wire cable 22 to the shown example connector 20, it is to be noted that the terminus of the wire cable 22 is extended through the cap 38 and the crimp adapter 80 (see Fig. 6). As such, the terminus of the wire cable 22 can be thought of as an end portion of the wire cable. Of course, it is to be appreciated that some other aspect, e.g., only an end portion of one wire 84, can be thought of as a terminus. For example, a bared portion of the one wire 84 could be thought of as a terminus.

In preparation for connecting the terminus of the wire cable 22 to the connector 20, an end portion of any protective cable covering is removed (e.g., stripped) to expose the wires 84 contained therein. Further, any coverings on the two wires 84 are removed (e.g., stripped) at the terminus ends to expose the bare wires. Next, the bare wire ends are bent to the outer sides and backward, relative to the wire cable 22. Next, the bared wires 84 are laid onto the exposed rear end portions 76 of the prongs 34 extending from the rear of the body 32. As shown in Fig. 6, the wires are thus generally bent back adjacent to the crimp adapter 80. As shown in Fig. 7, the wire cable 22 and the crimp adapter 80 are located in position relative to the rear portion 74. It is to be appreciated that the connector 20 thus has structure to retain the wire cable. A subsequent step for the wires 84 is to bend the tips of the bared wires across the prong rear end portions 76.

It is to be appreciated that the springs 112 are within the cap 38. When the cap 38 is attached to the body 32 (e.g., via relative movement to complete the snap interlock), the springs 112 will engage and ride over the rear end portions 76 of the prongs 34. In other words, the rear end portions 76 are received into the springs 112, with each spring squeezing the respective end portion there between. With the wire tips bent over the prong rear end portions 76, the wires 84 are squeezed into pressing contact with the respective prongs 34. Moreover, the springs 112 resiliently maintain the contact between the wires 84 and the prongs 34. Thus, the wires 84 are gripped and pressed against the prongs 34. Thus, electrical connection is established between each respective wire 84 and prong 34. Again, it is to be appreciated that the connector 20 thus has structure to retain (e.g., grasp) the wire cable.

It is to be appreciated that a portion of the body 32 does extend into the hollow interior 110 of the cap 38. This may be further appreciated upon viewing Fig. 3, which shows the hollow aspect of the cap 38, and Fig. 8, which shows the final assembly. In general, the connection of the wires 84 to the prongs 34 is considered to occur within the interior of the connector 20. Thus, the snap-lock interconnection not only secures the housing parts (e.g., the body and the cap) 32 and 38 together, but also encloses the interior.

Some of the features of the present invention should now be apparent. First, the two parts (e.g., the body and the cap) 32 and 38 of the connector 20 were connected without the use of any threaded fasteners, such as a screw, a bolt, or the like. Second, the terminus ends of the wires 84 are connected to the prongs 34 without the use of any threaded fasteners, such as a screw, a bolt, or the like. Also, the connection of the wires 84 to the prongs 34 occurs simultaneously with the connection of the cap 38 to the body 32.

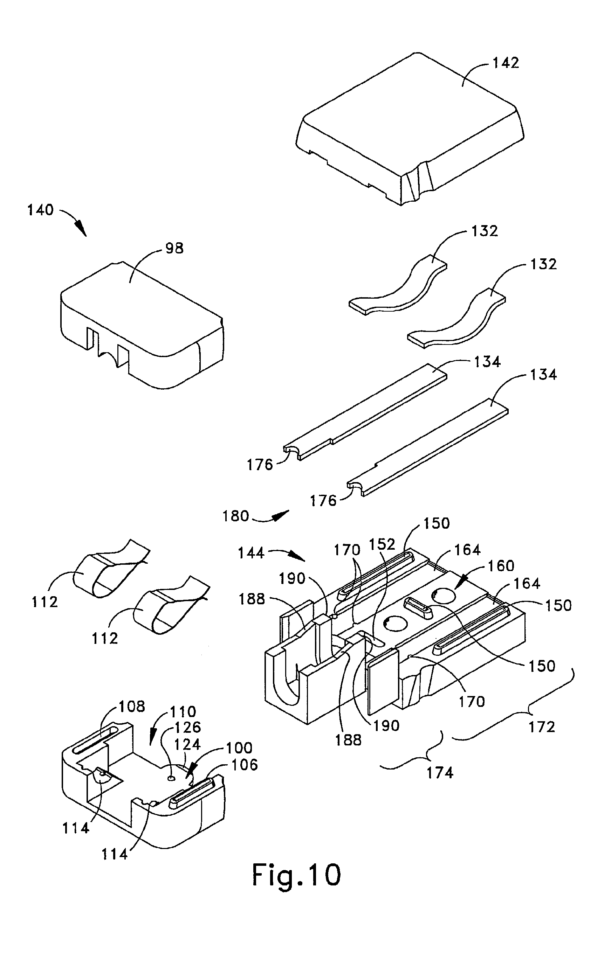

Fig. 9 is a view of the first connector 16 shown within the connector arrangement 12 of Fig. 1. Specifically, Fig. 9 is a view of an example mate component to the plug connector 20 discussed above and can be referred to as a jack connector 16. Fig. 10 is an exploded perspective is a view of the connector 16. The example connector 16 contains many similar features and construction techniques as discussed above. The structures unique to the connector 16 include metallic jack springs 132 and inserts 134. The springs and inserts 132 and 134 will interact with the prongs 34 upon insertion of the prongs into the connecter 16.

Turning to consider the overall construction of the connector 16, the connector has two housing parts 138 and 140. The first housing part 138 is referred to as a body, and in the shown example the body is made by two sections 142 and 144. For ease of reference, the sections are referred to as upper and lower sections 142 and 144. Similar to the body 32, the two sections 142 and 144 of the example body 138 can be made of thermoplastic that are secured together by suitable means.

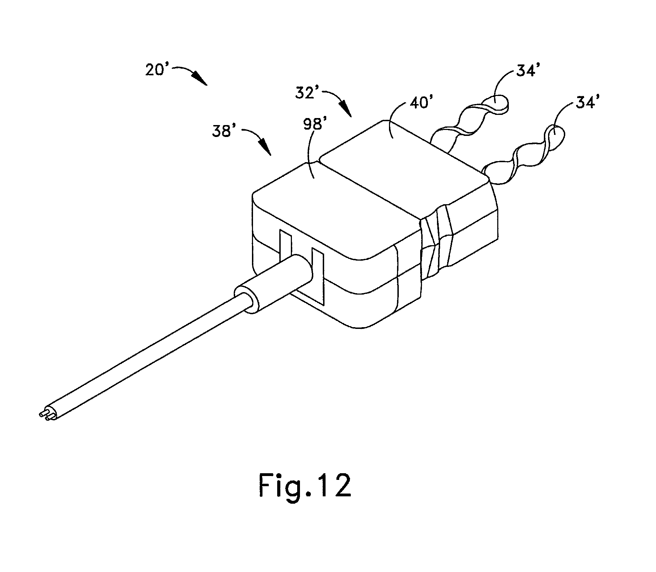

In the shown example, the lower body section 144 has a series of projections 150 and one recess 152, and the upper body section 142 has a series of recesses 154 and one projection 156. The respective projections and the recesses mate when the upper and lower body sections 142 and 144 are coupled together. It is to be noted that in one example, the projections 150 and 156 have structure that aid in securing the upper and lower sections 142 and 144 together. For example, the structure may be raised material, e.g., in an elongate pyramidal shape, which flows upon occurrence of an ultrasonic welding procedure. As can be appreciated by viewing Fig. 10, the upper and lower body sections 142 and 144 are configured to receive the jack springs 132 and inserts 134 at an interior 160 of the body 138. Specifically, the upper body section 142 includes recesses 162 (Fig. 11) in which the jack springs 132 (Fig. 10) lie, and the lower body section 144 includes recesses 164 in which the inserts 134 lie. It should be noted that the recesses 162 include depressions 166 within which the jack springs 132 are located to help retain the jack springs within the recesses. Similarly, the recesses 150 on the lower body section 144 have lips at the front edge to retain the inserts 134 against forward movement. Also, it should be noted that the lower body section 144 has portions that engage with portions of the inserts 134 (Fig. 10). In the shown example, the lower body section 144 has out-dents 170 within each of the recesses 164. When the inserts 134 are located within the recesses 164, a friction fit is such that the inserts are retained. This friction fit is useful to hold the inserts 134 during an intermediate manufacturing step. When the two body sections 142 and 144 are mated and secured together, the jack springs 132 and inserts 134 are retained therein. However, it is to be appreciated that various other constructions for retaining the inserts 134, such as during an intermediate manufacturing step, are possible and contemplated.

The portion of the body 138 that retains the jack springs 132 and inserts 134 can be considered to be a first or front portion 172 of the body, and the end into which the prongs can be inserted can be considered to be the front end of the body. Such a front portion 172 would include the entire upper body section 142 and the front of the lower body section 144. A portion 174 of the lower section 144 does extend to the rear and could naturally be considered a rear portion 174 of the body 138.

A rear end portion 176 of each insert 134 extends rearward from the front portion 172 of the body 138. The rear end portion 176 of each insert 134 is located at a respective side of the rear portion 174 of the body 138 (i.e., the rear of the lower body section). These insert end portions 176 are provided for electrical connection to an electrical connection terminus of the thermocouple probe lead. The constructions and functions to connect the terminus of the thermocouple probe lead are very similar to the connection between the terminus of the wire cable and the prongs associated with the connector 20. As such, most of the details need not be presented at length herein. It is sufficient to state that terminus ends are laid adjacent to the insert rear end portions 176, with the electrically conductive tips bent across the insert end portions. Also, in the shown example, the connector has structure to support the thermocouple probe in a static position relative to the connector.

The rear portion 174 includes at least one (e.g., two) sloped surface 188 and at least one (e.g., two) drop-off shoulder 190. Each sloped surface 188 tapers upward as the sloped surface extends toward the front of the body 138. Each shoulder 190 is located near the front-most terminus of the respective sloped surface 188. In the shown example, the sloped surfaces 188 and shoulders 190 have a very similar or identical structure as the sloped surfaces 88 and shoulders 90 of the connector 20, and thus have very similar or identical functions.

As mentioned, the shown example the cap 140 is very similar or identical to the cap 38 of the plug connector 20. As such, functions of the body and cap 138 and 140 are similar to the functions of the body and cap 32 and 38 of the connector 20. Also, in view of the fact that the example cap 140 is very similar or identical to the cap 38 of the plug connector 20, identical reference numerals are used for identifying structural details and the previously presented descriptions are to be understood as being applicable.

Similar to the plug connector 20 discussed above, the body and cap 138 and 140 are configured to snap together in a one-way type of connection without the use of screws. Also, similar to the plug connector 20 discussed above, electrical connections can be secured without the use of screws. Specifically, because of the presence of the springs 112 within the cap 140, upon insertion of the cap onto the body 138, the springs press the electrical terminus (e.g., contacts) of the probe 14 to the rear end portions 176 of the inserts 134.

It is to be also noted that either the plug connector or the jack connector may be utilized with a cable or may be utilized with some other components such as a probe extension. Specifically, the connectors are not limited to the shown example uses, and it is contemplated that the plug connector or the jack connector may be reversed with regard to connections to the wire cable 22 and the thermocouple probe 14.

Fig. 12 shows a modification that has some similarity to the connector 20. As such, reference numerals that have an added prime (') are utilized to identify similar or even identical structure. Focusing on the modification features, the prongs 34' are different such that the prongs may be utilized to engage a corresponding round receptacle. Specifically, free ends (i.e., extending out from the connector body) of the prongs are twisted into a helix form. The edges of the twisted prong would then engage a round opening of a mating connector. It is contemplated that the connecters for which such a helix-prong configuration may have some of the same structural and functional features presented for the connectors 16 and 20. For example, one or both of the associated connectors may include housing parts that mate in a snap-lock arrangement to secure the housing parts together and to enclose the respective interior. Also one or both of the associated connectors may include structure that engages an electrical connection terminus and secures the terminus against removal without the use of a threaded fastener. As a further aspect, the engagement and securing without the use of a threaded fastener may occur during the mating of the housing parts.

It should be evident that this disclosure is by way of example and that various changes may be made by adding, modifying, or eliminating details without departing from the scope of teachings contained in this disclosure. In particular, the discussion and drawings are presented herein by way of example only and other variations are contemplated and considered within the scope of the invention.

The preferred features of the invention are applicable to all aspects of the invention and may be used in any possible combination.

Throughout the description and claims of this specification, the words "comprise" and "contain" and variations of the words, for example "comprising" and "comprises", mean "including but not limited to", and are not intended to (and do not) exclude other components, integers, moieties, additives or steps.

## Claims

1. A thermocouple connector arrangement including:
a first connector configured to have a thermocouple probe lead extending therefrom, and having an interior configured to receive an electrical connection terminus of the thermocouple probe lead; and
a second connector configured to have an electrical connection lead extending therefrom, and having an interior configured to receive a terminus of the electrical connection lead;
wherein the first and second connectors include electrically conductive mating parts that, when mated, provide an electrical conduction path between the thermocouple probe lead and the electrical connection lead; and
wherein at least one of the first and second connectors includes structure that engages the respective terminus and secures the respective terminus against removal without the use of a threaded fastener.

2. A thermocouple connector arrangement as set forth in claim 1, wherein the structure of the at least one of the first and second connectors comprises housing parts that mate in a snap-lock arrangement to secure the housing parts together and to enclose the respective interior.

3. A connector arrangement as set forth in claim 1, wherein the structure of the at least one of the first and second connectors comprises a mating part formed as a prong including a strip of conductive material twisted into a helix.

4. A thermocouple connector arrangement as set forth in any preceding claim, wherein at least one of the first and second connectors includes structure that engages the respective terminus and secures the respective terminus against removal during the mating of the housing parts and without the use of a threaded fastener.

5. A thermocouple connector arrangement as set forth in any preceding claim, wherein the thermocouple probe is elongate and rigid, and the first connector has structure to support the thermocouple probe in a static position relative to the first connector.

6. A thermocouple connector arrangement as set forth in any preceding claim, wherein the electrical connection lead is elongate and flexible, and the second connector has structure to grasp the electrical connection lead.

7. A thermocouple connector arrangement as set forth in claim 2 or any claim depending therefrom, wherein the snap-lock arrangement is not supplemented by use of a threaded fastener to secure the housing parts together.

8. A thermocouple connector arrangement as set forth in claim 2 or any claim depending therefrom, wherein the snap-lock arrangement includes structure to resist separation of the housing parts subsequent to mating of the parts.

9. A thermocouple connector arrangement as set forth in claim 8, wherein the snap-lock arrangement includes a sloped surface and a shoulder on one of the parts and a portion for sliding against the sloped surface during mating of the parts and resting against the shoulder upon completion of the mating of the parts.

10. A thermocouple connector arrangement as set forth in any preceding claim, wherein the structure includes at least one member against which a segment of the terminus is pressed and at least one member that presses the terminus.

11. A thermocouple connector arrangement as set forth in claim 10, wherein the at least one member about which the segment of the terminus is pressed is a metal insert, a metal prong, a spring member or a metal spring clip.

12. A thermocouple connector arrangement as set forth in any one of claims 1 to 9, wherein the structure includes at least one member about which a segment of the terminus is folded and at least one member that folds the terminus.

13. A thermocouple connector arrangement as set forth in any preceding claim, wherein the structure that engages the respective terminus and secures the respective terminus against removal during the mating of the housing parts includes structure associated with each of the housing parts that mate.

14. A thermocouple connector arrangement as set forth in claim 4, wherein the structure that engages the respective terminus and secures the respective terminus against removal during the mating of the housing parts includes at least one member against which a segment of the terminus is pressed is associated with one housing part and at least one member that presses the terminus is associated with another housing part.

15. A thermocouple connector arrangement as set forth claim 2 or any claim depending therefrom, wherein at least one mating part of one of the first and second connectors is a prong that includes a strip of conductive material twisted into a helix.
